# EUROPEAN PATENT APPLICATION

(11) **EP 3 461 549 A1**
(43) Date of publication of application: **03.04.2019**
(21) Application number: 17825357.1
(22) Date of filing: 31.07.2017
(51) Int. Cl.: B01D 50/00, B01D 53/78, B01D 45/16, B01D 53/32, B03C 3/02

(54) **DEDUSTING AND DEMISTING APPARATUS FOR WET DESULFURIZATION, AND ELECTROMECHANICAL COUPLING WET DEDUSTING AND DEMISTING APPARATUS**

(71) Applicant: BEIJING ZHONGNENG NUOTAI ENERGY SAVING AND ENVIRONMENTAL PROTECTION CO., LTD., Beijing 100160 (CN)
(72) Inventor: WU, Zhengmin, Beijing 100160 (CN); ZHAO, Yuncai, Beijing 100160 (CN); WANG, Liang, Beijing 100160 (CN)
(74) Representative: Kraus & Weisert Patentanwälte PartGmbB
(86) International application number: PCT/CN2017/095229
(87) International publication number: WO 2019/023871

(57) **Abstract**

Disclosed is a dust and mist removal device for wet desulfurization. The dust and mist removal device for wet desulfurization comprises a multi-stage mechanical dust and mist removal device and a wet electrostatic precipitator; wherein the multi-stage mechanical dust and mist removal device is connected in series to the wet electrostatic precipitator to form an electromechanical wet dust and mist removal unit, the multi-stage mechanical dust and mist removal device is positioned at a lower part the wet electrostatic precipitator, the multi-stage mechanical dust and mist removal device matches with the wet electrostatic precipitator in terms of cross-section shape and size, and the number of electromechanical wet dust and mist removal units arranged in parallel is defined according to a flue gas amount to be treated. According to the present application, the dust and mist removal efficiency is improved, the use is convenient and the cost is low.

## Description

### TECHNICAL FIELD

The present application relates to the technical field of desulfurization and dust removal, and in particular, relates to a dust and mist removal device for wet desulfurization and an electromechanical coupling wet dust and mist remover.

### BACKGROUND

At present, in China, hollow-spraying-tower limestone wet desulfurization technique is universally used to treat the flue gas and industrial exhaust gas SO₂. After the flue gas is subjected to washing, purification and desulfurization by the hollow-wet-spraying-tower, tiny droplets generated during the spraying are carried. Therefore, a mist remover needs to be installed to remove the droplets. In practice, no matter whether a flat-plate mist remover or a ridge mist remover is used, the efficiency in removing droplets smaller than 5 µm and dusts in the flue gas smaller than 5 µm, and sulphates, sulphites, nitrates, nitrites and the like tiny particles may not satisfy the environment protection requirement. Even if a multi-stage cyclone pipe-type dust and mist remover having a high removal efficiency is used, aerosols, heavy metals and the like hazardous substances are still hard to remove.

To satisfy the stricter and stricter environment protection requirement, a wet electrostatic precipitator needs to be configured for the mist remover of the wet desulfurization device to achieve further purification. The wet electrostatic precipitation can effectively removes the tiny particles and heavy metals, but has the following problems:
1. The device is large. If the device is constructed at an upper part of the original desulfurization tower, a greater load is increased, and thus the base of the original absorption tower needs to be consolidated.
2. Due to the requirements on the flue gas flow rate and the residue time thereof, generally the diameter and height of the absorption tower need to be increased, and thus the reconstruction workload is great.
4. The reconstruction needs a larger construction space, and reconstruction on the existing facilitate is very hard.
5. The initial investment is high, the maintenance workload is great, and the operational power consumption is high.

Therefore, how to improve the conventional desulfurization dust and mist removal device is a technical problem to be urgently solved in the prior art.

### SUMMARY

In view of the above, the present application provides a dust and mist removal device for wet desulfurization and an electromechanical coupling wet dust and mist remover, which improve dust and mist removal efficiency and are convenience in use and low in cost.

The present application provides a dust and mist removal device for wet desulfurization, comprising a multi-stage mechanical dust and mist removal device and a wet electrostatic precipitator; wherein the multi-stage mechanical dust and mist removal device is connected in series to the wet electrostatic precipitator to form an electromechanical wet dust and mist removal unit, the multi-stage mechanical dust and mist removal device is positioned at a lower part the wet electrostatic precipitator, the multi-stage mechanical dust and mist removal device matches with the wet electrostatic precipitator in terms of cross-section shape and size, and the number of electromechanical wet dust and mist removal units arranged in parallel is defined according to a flue gas amount to be treated.

In a specific embodiment of the present application, the multi-stage mechanical dust and mist removal device comprises: a first housing, at least one cyclone and a central washing unit; wherein the cyclone is concentrically arranged from top to bottom within the first housing, and the central washing unit and the cyclone are concentrically arranged.

In a specific embodiment of the present application, the first housing has a cylindrical shape or a polygonal cylindrical shape.

In a specific embodiment of the present application, the cyclone has a circular shape or a polygonal shape.

In a specific embodiment of the present application, if the first housing has a polygonal cylindrical shape and the cyclone has a circular shape, the device further comprises an abnormally-shaped guiding cylinder; wherein one end of the abnormally-shaped guiding cylinder is installed by means of shape-adaptation to the first housing, and the other end of the abnormally-shaped guiding cylinder is installed by means of shape-adaptation to the cyclone distal from the an axial center end of the first housing.

In a specific embodiment of the present application, if the first housing has a polygonal cylindrical shape and the cyclone has a circular shape, the device further comprises an abnormally-shaped guiding plate; wherein an outer side of the abnormally-shaped guiding plate is installed by means of shape-adaptation to the first housing, and an inner side of the abnormally-shaped guiding cylinder is installed by means of shape-adaptation to the cyclone distal from the an axial center end of the first housing.

In a specific embodiment of the present application, the cyclone comprises a cyclone shroud arranged on an outer side of the cyclone; wherein a gap is arranged between the cyclone shroud and the first housing as an exhaust passage.

In a specific embodiment of the present application, the gap is 5 to 10 mm.

In a specific embodiment of the present application, the cyclone further comprises cyclone blades and a central blind cylinder; wherein the cyclone blades are arranged between the central blind cylinder and the cyclone shroud.

In a specific embodiment of the present application, the cyclone blades are annularly arranged along an outer wall of the central blind cylinder with the center of the central blind cylinder as a central point, and one end of the cyclone blades is connected to the central blind cylinder, and the other end of the cyclone blades is connected to the cyclone shroud.

In a specific embodiment of the present application, the central blind cylinder further comprises an upper sealing plate and a lower sealing plate that are configured to seal the central blind cylinder.

In a specific embodiment of the present application, the upper sealing plate and the lower sealing plate both have a semi-ellipsoidal shape.

In a specific embodiment of the present application, the central washing device comprises a washing pipe and a washing nozzle installed on the washing pipe; where the washing pipe passes through the central blind cylinder and is arranged as concentric to the cyclone.

In a specific embodiment of the present application, the washing nozzle comprises a radial washing nozzle array with the center of the washing pipe as a center; wherein the radial washing nozzle array is arranged along an outer surface of the washing pipe in the same horizontal plane, and washing water jet by the radial washing nozzle array divergently washes the first housing and the cyclone.

In a specific embodiment of the present application, the washing nozzle further comprises an axial washing nozzle array arranged at an upper end of the washing pipe; wherein washing water jet by the axial washing nozzle array is upwardly diverged out of the washing pipe.

In a specific embodiment of the present application, the central washing device further comprises a soft pipe joint connected to a lower end of the washing pipe, which is configured to connect the washing pipe to a washing water main pipe.

In a specific embodiment of the present application, the wet electrostatic precipitator comprises a second housing and a central discharge device; wherein the central discharge device is arranged in the center of the second housing.

In a specific embodiment of the present application, the second housing has a cylindrical shape or a polygonal cylindrical shape.

In a specific embodiment of the present application, the first housing and the second housing are connected in an integration manner or a separation manner.

In a specific embodiment of the present application, the housing of the wet electrostatic precipitator is made from a conductive material and is connected to the ground.

In a specific embodiment of the present application, the central discharge device comprises a conductive bar and a discharge electrode.

In a specific embodiment of the present application, the conductive bar is solid or hollow.

In a specific embodiment of the present application, the discharge electrode is a sawtooth-shaped discharge electrode; wherein a side with no sawtooth is connected to the conductive bar, and a side with sawteeth is exposed to the outside.

In a specific embodiment of the present application, the sawtooth-shaped discharge electrode is uniformly arranged along a circumference on an outer surface of the conductive bar.

In a specific embodiment of the present application, the discharge electrode is a needle-shaped discharge electrode; wherein a side with no needle is connected to the conductive bar, and a side with needles is exposed to the outside.

In a specific embodiment of the present application, the needle-shaped discharge electrode is spirally arranged along an outer surface of the conductive bar based on a predetermined pitch.

In a specific embodiment of the present application, the central discharge device further comprises a discharge electrode connection unit; wherein the discharge electrode connection unit is configured to connect the central discharge device to an upper cathode frame.

In a specific embodiment of the present application, a suspension part of the wet electrostatic precipitator is provided with a sealing and drying wind.

The present application further provides an electromechanical coupling wet dust and mist remover, comprising at least one dust and mist removal unit installed on a support frame in an absorption tower; wherein the dust and mist removal unit comprises a multi-stage mechanical dust and mist removal device and a wet electrostatic precipitator that are connected in series; wherein the multi-stage mechanical dust and mist removal device is positioned at a lower part the wet electrostatic precipitator, the multi-stage mechanical dust and mist removal device matches with the wet electrostatic precipitator in terms of cross-section shape and size, and the number of electromechanical wet dust and mist removal units arranged in parallel is defined according to a fuel gas amount to be treated.

In a specific embodiment of the present application, an upper end of each dust and mist removal unit is provided with a sealing device which is configured to prevent the flue gas from escaping from a gap between the dust and mist removal units and between the dust and mist removal unit and a wall of the absorption tower without dust and mist removal.

As seen from the above technical solutions, the present application has the following advantages over the conventional wet electrostatic precipitator:

1. The conventional wet electrostatic precipitator is arranged at an upper part of the absorption tower, and thus the diameter and height of the absorption tower need to be increased. As such, the outlet flue gas cleaning passage of the absorption tower needs to be reconstructed. If the diameter and height of the absorption tower are increased and the weight of the wet electrostatic precipitator is increased, the load is significantly increased, and thus the base of the absorption tower needs to be consolidated. If the wet electrostatic precipitator is otherwise arranged outside the absorption tower, a larger construction space is needed, and the flue gas passage construction work between the absorption tower and the electrostatic precipitator is great and the flue gas resistance is also great.

The dust and mist removal device for wet desulfurization according to the present application replaces the conventional customary mist remover, and may be installed without increasing the diameter and height of the absorption tower, which thus occupies a small space and has a small increase of load.

2. The dust and mist removal device for wet desulfurization according to the present application has the advantages of both the mechanical dust and mist removal device and the wet electrostatic precipitator, and achieves superposition of the effects thereof. Since the multi-stage mechanical dust and mist removal device is arranged at a lower part of the dust and mist removal device for wet desulfurization, the flue gas generates a centrifugal force by rotation when the flue gas rises, such that tiny particles and the like are more simply captured and removed in the wet electrostatic precipitation, and thus the tiny dust particles and PM2.5 and heavy metals may be effectively removed.

3. The present application has the advantages of simple structure, low investment, convenient installation, low operation cost, simple maintenance, and high reliability.

### BRIEF DESCRIPTION OF THE DRAWINGS

To describe technical solutions according to the embodiments of the present application or in the prior art, drawings that are to be referred for description of the embodiments or the prior art are briefly described hereinafter. Apparently, the drawings described hereinafter merely illustrate some embodiments of the present application. Persons of ordinary skill in the art may also derive other drawings based on the drawings described herein.
FIG. 1 is a schematic structural diagram of a dust and mist removal device for wet desulfurization according to the present application;
FIG. 2a to FIG. 2c are schematic diagrams illustrating installation of a cyclone of a multi-stage mechanical dust and mist removal device in the dust and mist removal device for wet desulfurization according to the present application;
FIG. 3 is a schematic diagram of a central washing unit of the multi-stage mechanical dust and mist removal device in the dust and mist removal device for wet desulfurization according to the present application;
FIG. 4a to FIG. 4d are schematic structural diagrams of a wet electrostatic precipitator in the dust and mist removal device for wet desulfurization according to the present application; and
FIG. 5 is a schematic sectional view of an application scenario of an electromechanical coupling wet dust and mist remover according to the present application.

### DETAILED DESCRIPTION

Definitely, the implementation of any technical solution of the present application does not need to achieve all the above advantages.

To make a person skilled in the art better understand the technical solutions of the present application, the technical solutions in the embodiments of the present application are described clearly and completely with reference to the accompanying drawings in the embodiments of the present application. Apparently, the described embodiments are merely some of rather than all of the embodiments of the present application. Based on the embodiments of the present application, all other embodiments derived by persons of ordinary skill in the art without any creative efforts shall fall within the protection scope of the present application.

Specific implementations of the present application are further described hereinafter with reference to drawings of the present application.

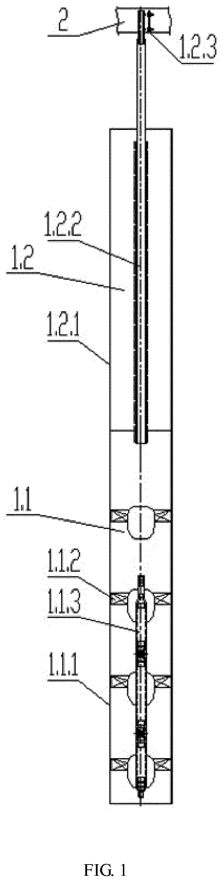

In a specific embodiment of the present application, referring to FIG. 1, a dust and mist removal device for wet desulfurization is provided, comprising a multi-stage mechanical dust and mist removal device 1.1 and a wet electrostatic precipitator 1.2; wherein the multi-stage mechanical dust and mist removal device 1.1 is connected in series to the wet electrostatic precipitator 1.2 to form an electromechanical wet dust and mist removal unit, the multi-stage mechanical dust and mist removal device 1.1 is positioned at a lower part the wet electrostatic precipitator 1.2, the multi-stage mechanical dust and mist removal device 1.1 matches with the wet electrostatic precipitator 1.2 in terms of cross-section shape and size, and the number of electromechanical wet dust and mist removal units arranged in parallel is defined according to a fuel gas amount to be treated.

The dust and mist removal device for wet desulfurization according to the present application has the advantages of both the mechanical dust and mist removal device 1.1 and the wet electrostatic precipitator 1.2, and achieves superposition of the effects thereof. Since the multi-stage mechanical dust and mist removal device 1.1 is arranged at a lower part of the dust and mist removal device for wet desulfurization, the flue gas generates a centrifugal force by rotation when the flue gas rises, such that tiny particles and the like are more simply captured and removed in the wet electrostatic precipitation, and thus the tiny dust particles and PM2.5 and heavy metals may be effectively removed.

The dust and mist removal device for wet desulfurization according to the present application replaces the conventional customary mist remover, and may be installed without increasing the diameter and height of the absorption tower, which thus occupies a small space and has a small increase of load.

The present application has the advantages of simple structure, low investment, convenient installation, low operation cost, simple maintenance, and high reliability.

In a specific embodiment of the present application, the multi-stage mechanical dust and mist removal device 1.1 comprises: a first housing 1.1.1, at least one cyclone 1.1.2 and a central washing unit 1.1.3; wherein the cyclone 1.1.2 is concentrically arranged from top to bottom within the first housing 1.1.1, and the central washing unit 1.1.3 and the cyclone 1.1.2 are concentrically arranged. Therefore, according to the present application, rotation of the cyclone 1.1.2 causes the flue gas to rise and rotate, thereby causing a centrifugal force; and the flue gas is washed by the central washing unit 1.1.3 for dust removal and desulfurization.

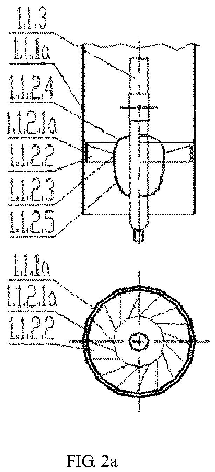

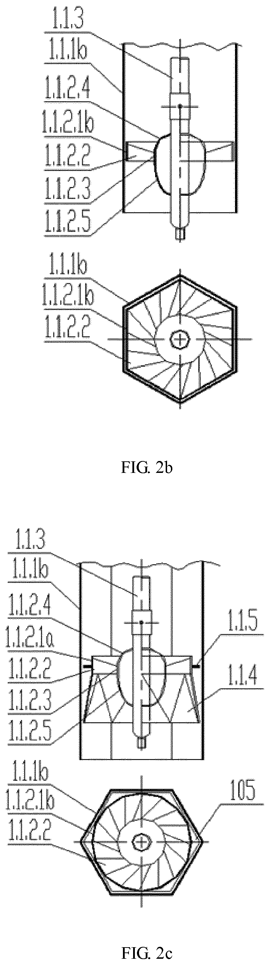

Specifically, referring to FIG. 2a to FIG. 2c, the first housing 1.1.1 is a cylinder-shaped housing 1.1.1a or a polygonal cylinder-shaped housing 1.1.1b.

The cyclone 1.1.2 may be a circular cyclone 1.1.2a or a polygonal cyclone 1.1.2b.

In a specific embodiment of the present application, referring to FIG. 2a to FIG. 2c, the cyclone 1.1.2 comprises a cyclone shroud 1.1.2.1 arranged on an outer side of the cyclone 1.1.2; wherein a gap is arranged between the cyclone shroud 1.1.2.1 and the first housing 1.1.1 as an exhaust passage.

The cyclone shroud 1.1.2.1 may be a cylinder-shaped cyclone shroud 1.1.2.1a or a polygonal cylinder-shaped cyclone shroud 1.1.2.1b.

Specifically, the gap is 5 to 10 mm.

Therefore, according to the present application, a gap is defined between the cyclone shroud 1.1.2.1 and the first housing 1.1.1, such that the mechanical dust and mist removal device and the wet electrostatic precipitator contiguously collect along the wall the dust particles and droplets from the first housing and the second housing due to downward precipitation under the effect of gravity, and thus the dust particles and droplets may not be broken by the rising flue gas and are secondarily carried.

In a specific embodiment of the present application, referring to FIG. 2c, if the first housing has a polygonal cylindrical shape and the cyclone has a circular shape, the device further comprises an abnormally-shaped guiding cylinder 1.1.4; wherein one end of the abnormally-shaped guiding cylinder 1.1.4 is installed by means of shape-adaptation to the first housing 1.1.1b, and the other end of the abnormally-shaped guiding cylinder 1.1.4 is installed by means of shape-adaptation to the cyclone shroud 1.1.2.1. For example, one end of the abnormally-shaped guiding cylinder 1.1.4 is a regular polygon having the same shape as the regular polygonal cylinder-shaped housing 1.1.1b but slightly smaller than the regular polygonal cylinder-shaped housing 1.1.1b, and the other end of the abnormally-shaped guiding cylinder 1.1.4 is a circle having the same size as the circular cyclone shroud 1.1.2.1a of the circular cyclone.

In a specific embodiment of the present application, referring to FIG. 2c, if the first housing has a polygonal cylindrical shape and the cyclone has a circular shape, the device further comprises an abnormally-shaped guiding plate 1.1.5; wherein an outer side of the abnormally-shaped guiding plate 1.1.5 is installed by means of shape-adaptation to the first housing 1.1.1b, and an inner side of the abnormally-shaped guiding plate is installed by means of shape-adaptation to the cyclone shroud 1.1.2.1. For example, the outer side of the abnormally-shaped guiding plate 1.1.5 is a regular polygon with an outer side having the same shape as the regular polygonal cylinder-shaped housing 1.1.1b but slightly smaller than the regular polygonal cylinder-shaped housing 1.1.1b, and the inner side the abnormally-shaped guiding plate 1.1.5 is a circle with an inner side having the same size as the circular cyclone shroud 1.1.2.1a of the circular cyclone.

The cyclone 1.1.2 further comprises cyclone blades 1.1.2.2 and a central blind cylinder 1.1.2.3; wherein the cyclone blades 1.1.2.2 are arranged between the central blind cylinder 1.1.2.3 and the cyclone shroud 1.1.2.1.

The cyclone blades 1.1.2.2 are annularly arranged along an outer wall of the central blind cylinder 1.1.2.3 with the center of the central blind cylinder 1.1.2.3 as a central point, and one end of the cyclone blades 1.1.2.2 is connected to the central blind cylinder 1.1.2.3, and the other end of the cyclone blades 1.1.2.2 is connected to the cyclone shroud 1.1.2.1. Arrangement of the cyclone shroud 1.1.2.1 technically isolates the impacts caused by high-speed rotation of the rising gas flow between the cyclone blades 1.1.2.2 to falling of the collected dust particles and droplets along the housing, and in practice renders the cyclone blades 1.1.2.2 to be integral. In this way, the entire strength is improved, and practice of fabrication and installation is eased.

Specifically, the number of cyclone blades 1.1.2.2 is 12 to 18.

In a specific embodiment of the present application, the central blind cylinder 1.1.2.3 further comprises an upper sealing plate 1.1.2.4 and a lower sealing plate 1.1.2.5 that are configured to seal the central blind cylinder 1.1.2.3.

The upper sealing plate 1.1.2.4 and the lower sealing plate 1.1.2.5 both have a semi-ellipsoidal shape. The upper sealing plate 1.1.2.4 and the lower sealing plate 1.1.2.5 are both defined as a semi-ellipsoidal shape, such that the entire central blind cylinder 1.1.2.3 is streamlined, and the gas flow entering and exiting the cyclone 1.1.2 is smoother, with a smaller resistance.

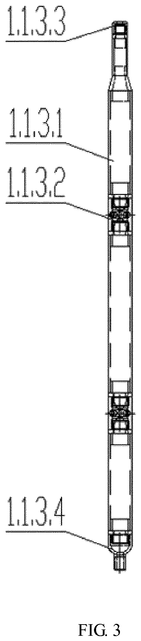

In a specific embodiment of the present application, referring to FIG. 3, the central washing unit 1.1.3 comprises a washing pipe 1.1.3.1 and a washing nozzle; wherein the washing pipe 1.1.3.1 passes through the central blind cylinder 1.1.2.3 and is arranged as concentric to the cyclone 1.1.2.

Specifically, the washing nozzle includes a radial washing nozzle array 1.1.3.2 with the center of the washing pipe 1.1.3.1 as a center; wherein the radial washing nozzle array 1.1.3.2 is arranged along an outer surface of the washing pipe 1.1.3.1 in the same horizontal plane, and washing water jet by the radial washing nozzle array 1.1.3.2 divergently washes the first housing 1.1.1 and the cyclone 1.1.2.

The washing nozzle further comprises an axial washing nozzle array 1.1.3.3 arranged at an upper end of the washing pipe 1.1.3.1; wherein washing water jet by the axial washing nozzle array 1.1.3.3 is upwardly diverged out of the washing pipe 1.1.3.1 with the washing pipe as the center.

According to the arrangement of the cyclone 1.1.2 and the washing pipe 1.1.3.1, different washing nozzle arrays are selected, such that the number of washing nozzles may be reduced while achieving the same washing effect, thereby saving water.

The central washing device 1.1.3 further comprises a soft pipe joint 1.1.3.4 connected to a lower end of the washing pipe 1.1.3.1, which is configured to connect the washing pipe 1.1.3.1 to a washing water main pipe.

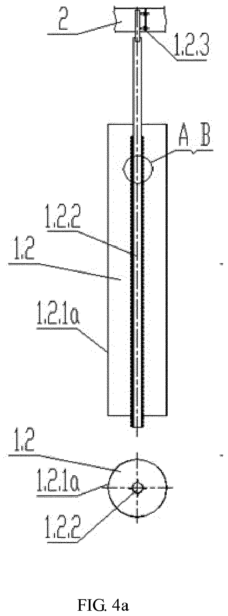

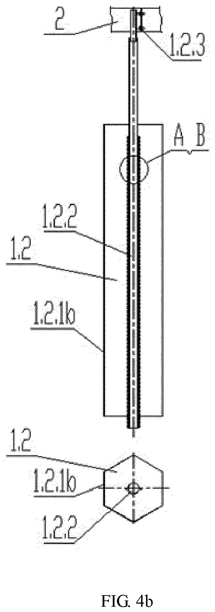

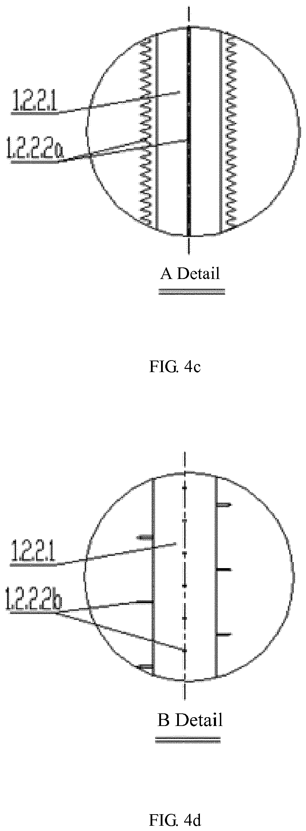

In a specific embodiment of the present application, referring to FIG. 4a to FIG. 4d, the wet electrostatic precipitator 1.2 comprises a second housing 1.2.1 and a central discharge device 1.2.2; wherein the central discharge device 1.2.2 is arranged in the center of the second housing 1.2.1.

In a specific embodiment of the present application, the second housing 1.2.1 has a cylindrical shape or a polygonal cylindrical shape.

In a specific embodiment of the present application, the first housing 1.1.1 and the second housing 1.2.1 are connected in an integration manner or a separation manner.

In a specific embodiment of the present application, the housing 1.2.1 of the wet electrostatic precipitator 1.2 is made from a conductive material and is connected to the ground.

In a specific embodiment of the present application, the central discharge device 1.2.2 comprises a conductive bar 1.2.2.1 and a discharge electrode 1.2.2.2.

Specifically, the conductive bar 1.2.2.1 is solid or hollow.

In a specific embodiment of the present application, the discharge electrode 1.2.2.2 is a sawtooth-shaped discharge electrode 1.2.2.2a; wherein a side with no sawtooth is connected to the conductive bar, and a side with sawteeth is exposed to the outside.

In a specific embodiment of the present application, the sawtooth-shaped discharge electrode 1.2.2.2a is uniformly arranged along a circumference on an outer surface of the conductive bar 1.2.2.1.

In a specific embodiment of the present application, the discharge electrode 1.2.2.2 is a needle-shaped discharge electrode 1.2.2.2b; wherein a side with no needle is connected to the conductive bar, and a side with needles is exposed to the outside.

In a specific embodiment of the present application, the needle-shaped discharge electrode 1.2.2.2b is spirally arranged along an outer surface of the conductive bar 1.2.2.1 based on a predetermined pitch.

In a specific embodiment of the present application, the central discharge device 1.2.2 further comprises a discharge electrode connection unit 1.2.3; wherein the discharge electrode connection unit 1.2.3 is configured to connect the central discharge device 1.2.2 to an upper cathode frame 2.

In a specific embodiment of the present application, a suspension part of the wet electrostatic precipitator 1.2 is provided with a sealing and drying wind, which ensures good insulation of the wet electrostatic precipitator 1.2.

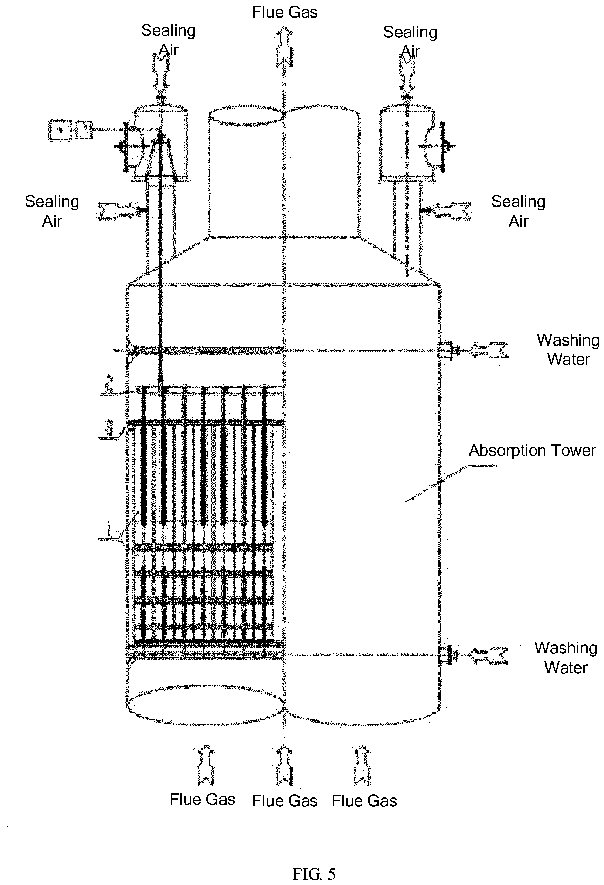

Referring to FIG. 5, an electromechanical coupling wet dust and mist remover is provided, comprising at least one dust and mist removal unit 1 installed on a support frame in an absorption tower; wherein the dust and mist removal unit 1 comprises a multi-stage mechanical dust and mist removal device 1.1 and a wet electrostatic precipitator 1.2 that are connected in series; wherein the multi-stage mechanical dust and mist removal device 1.1 is positioned at a lower part the wet electrostatic precipitator 1.2, the multi-stage mechanical dust and mist removal device 1.1 matches with the wet electrostatic precipitator 1.2 in terms of cross-section shape and size, and the number of electromechanical wet dust and mist removal units 1 arranged in parallel is defined according to a fuel gas amount to be treated.

In a specific embodiment of the present application, an upper end of each dust and mist removal unit 1 is provided with a sealing device 8 which is configured to prevent the flue gas from escaping from a gap between the dust and mist removal units 1 and between the dust and mist removal unit 1 and a wall of the absorption tower without dust and mist removal.

Although the preferred embodiments of the present application are described above, once knowing the basic creative concept, a person skilled in the art can make other modifications and variations to these embodiments. Therefore, the appended claims are intended to be construed as covering the preferred embodiments and all the modifications and variations falling within the scope of the present application. Obviously, a person skilled in the art can make various modifications and variations to the present application without departing from the spirit and scope of the present application. In this way, the present application is intended to cover the modifications and variations if they fall within the scope of the appended claims of the present application and equivalent technologies thereof.

## Claims

1. A dust and mist removal device for wet desulfurization, comprising a multi-stage mechanical dust and mist removal device and a wet electrostatic precipitator; wherein the multi-stage mechanical dust and mist removal device is connected in series to the wet electrostatic precipitator to form an electromechanical wet dust and mist removal unit, the multi-stage mechanical dust and mist removal device is positioned at a lower part the wet electrostatic precipitator, the multi-stage mechanical dust and mist removal device matches with the wet electrostatic precipitator in terms of cross-section shape and size, and the number of electromechanical wet dust and mist removal units arranged in parallel is defined according to a flue gas amount to be treated.

2. The dust and mist removal device for wet desulfurization according to claim 1, wherein the multi-stage mechanical dust and mist removal device comprises: a first housing, at least one cyclone and a central washing unit; wherein the cyclone is concentrically arranged from top to bottom within the first housing, and the central washing unit and the cyclone are concentrically arranged.

3. The dust and mist removal device for wet desulfurization according to claim 2, wherein the first housing has a cylindrical shape or a polygonal cylindrical shape.

4. The dust and mist removal device for wet desulfurization according to claim 3, wherein the cyclone has a circular shape or a polygonal shape.

5. The dust and mist removal device for wet desulfurization according to claim 2, wherein the cyclone comprises a cyclone shroud arranged on an outer side of the cyclone; wherein a gap is arranged between the cyclone shroud and the first housing as an exhaust passage.

6. The dust and mist removal device for wet desulfurization according to claim 5, wherein the gap is 5 to 10 mm.

7. The dust and mist removal device for wet desulfurization according to claim 5, wherein if the first housing has a polygonal cylindrical shape and the cyclone has a circular shape, the device further comprises an abnormally-shaped guiding cylinder; wherein one end of the abnormally-shaped guiding cylinder is installed by means of shape-adaptation to the first housing, and the other end of the abnormally-shaped guiding cylinder is installed by means of shape-adaptation to the cyclone shroud.

8. The dust and mist removal device for wet desulfurization according to any one of claims 5 to 7, wherein if the first housing has a polygonal cylindrical shape and the cyclone has a circular shape, the device further comprises an abnormally-shaped guiding plate; wherein an outer side of the abnormally-shaped guiding plate is installed by means of shape-adaptation to the first housing, and an inner side of the abnormally-shaped guiding cylinder is installed by means of shape-adaptation to the cyclone shroud.

9. The dust and mist removal device for wet desulfurization according to claim 5, wherein the cyclone further comprises cyclone blades and a central blind cylinder; wherein the cyclone blades are arranged between the central blind cylinder and the cyclone shroud.

10. The dust and mist removal device for wet desulfurization according to claim 9, wherein the cyclone blades are annularly arranged along an outer wall of the central blind cylinder with the center of the central blind cylinder as a central point, and one end of the cyclone blades is connected to the central blind cylinder, and the other end of the cyclone blades is connected to the cyclone shroud.

11. The dust and mist removal device for wet desulfurization according to claim 9, wherein the central blind cylinder further comprises an upper sealing plate and a lower sealing plate that are configured to seal the central blind cylinder.

12. The dust and mist removal device for wet desulfurization according to claim 11, wherein the upper sealing plate and the lower sealing plate both have a semi-ellipsoidal shape.

13. The dust and mist removal device for wet desulfurization according to claim 9, wherein the central washing device comprises a washing pipe and a washing nozzle installed on the washing pipe; wherein the washing pipe passes through the central blind cylinder and is arranged as concentric to the cyclone.

14. The dust and mist removal device for wet desulfurization according to claim 13, wherein the washing nozzle comprises a radial washing nozzle array with the center of the washing pipe as a center; wherein the radial washing nozzle array is arranged along an outer surface of the washing pipe in the same horizontal plane, and washing water jet by the radial washing nozzle array divergently washes the first housing and the cyclone.

15. The dust and mist removal device for wet desulfurization according to claim 13, wherein the washing nozzle further comprises an axial washing nozzle array arranged at an upper end of the washing pipe; wherein washing water jet by the axial washing nozzle array is upwardly diverged out of the washing pipe.

16. The dust and mist removal device for wet desulfurization according to claim 13, wherein the central washing device further comprises a soft pipe joint connected to a lower end of the washing pipe, which is configured to connect the washing pipe to a washing water main pipe.

17. The dust and mist removal device for wet desulfurization according to claim 2, wherein the wet electrostatic precipitator comprises a second housing and a central discharge device; wherein the central discharge device is arranged in the center of the second housing.

18. The dust and mist removal device for wet desulfurization according to claim 17, wherein the second housing has a cylindrical shape or a polygonal cylindrical shape.

19. The dust and mist removal device for wet desulfurization according to claim 18, wherein the first housing and the second housing are connected in an integration manner or a separation manner.

20. The dust and mist removal device for wet desulfurization according to claim 17, wherein the housing of the wet electrostatic precipitator is made from a conductive material and is connected to the ground.

21. The dust and mist removal device for wet desulfurization according to claim 17, wherein the central discharge device comprises a conductive bar and a discharge electrode.

22. The dust and mist removal device for wet desulfurization according to claim 21, wherein the conductive bar is solid or hollow.

23. The dust and mist removal device for wet desulfurization according to claim 21, wherein the discharge electrode is a sawtooth-shaped discharge electrode; wherein a side with no sawtooth is connected to the conductive bar, and a side with sawteeth is exposed to the outside.

24. The dust and mist removal device for wet desulfurization according to claim 23, wherein the sawtooth-shaped discharge electrode is uniformly arranged along a circumference on an outer surface of the conductive bar.

25. The dust and mist removal device for wet desulfurization according to claim 21, wherein the discharge electrode is a needle-shaped discharge electrode; wherein a side with no needle is connected to the conductive bar, and a side with needles is exposed to the outside.

26. The dust and mist removal device for wet desulfurization according to claim 25, wherein the needle-shaped discharge electrode is spirally arranged along an outer surface of the conductive bar based on a predetermined pitch.

27. The dust and mist removal device for wet desulfurization according to claim 21, wherein the central discharge device further comprises a discharge electrode connection unit; wherein the discharge electrode connection unit is configured to connect the central discharge device to an upper cathode frame.

28. The dust and mist removal device for wet desulfurization according to claim 17, wherein a suspension part of the wet electrostatic precipitator is provided with a sealing and drying wind.

29. An electromechanical coupling wet dust and mist remover, comprising at least one dust and mist removal unit installed on a support frame in an absorption tower; wherein the dust and mist removal unit comprises a multi-stage mechanical dust and mist removal device and a wet electrostatic precipitator that are connected in series; wherein the multi-stage mechanical dust and mist removal device is positioned at a lower part the wet electrostatic precipitator, the multi-stage mechanical dust and mist removal device matches with the wet electrostatic precipitator in terms of cross-section shape and size, and the number of electromechanical wet dust and mist removal units arranged in parallel is defined according to a flue gas amount to be treated.

30. The electromechanical coupling wet dust and mist remover according to claim 29, wherein an upper end of each dust and mist removal unit is provided with a sealing device which is configured to prevent the flue gas from escaping from a gap between the dust and mist removal units and between the dust and mist removal unit and a wall of the absorption tower without dust and mist removal.
